# EUROPEAN PATENT SPECIFICATION

(11) **EP 1 461 542 B1**
(45) Date of publication and mention of the grant of the patent: **18.01.2006**
(21) Application number: 01985434.8
(22) Date of filing: 24.12.2001
(51) Int. Cl.: F16G 5/16, B21D 53/14

(54) **WORK PIECE, METAL PUSH BELT AND METHOD AND PROCESSING TOOL FOR PRODUCING THE SAME**
WERKSTÜCK,SCHUBTREIBRIEMEN UND VERFAHREN UND WERKZEUG DAFÜR
PIECE, COURROIE METALLIQUE TRAVAILLANT EN POUSSEE, ET PROCEDE ET OUTIL DE FAçONNAGE PERMETTANT DE LES PRODUIRE

(43) Date of publication of application: 29.09.2004
(73) Proprietor: Van Doorne's Transmissie B.V., 5000 AM Tilburg (NL)
(72) Inventor: VAN LIEMPD, Jeroen, Herman, NL-4854 RM Bavel (NL)
(86) International application number: PCT/EP2001/015216
(87) International publication number: WO 2003/069185

(56) References cited:
- EP-A- 0 278 545
- EP-A- 1 158 204
- PATENT ABSTRACTS OF JAPAN vol. 2000, no. 02, 29 February 2000 (2000-02-29) & JP 11 309522 A (HONDA MOTOR CO LTD), 9 November 1999 (1999-11-09)

## Description

The present invention relates to a work piece, a manufacturing method therefore and a push belt comprising an endless tensile means and a work piece such as a transverse metal element to be arranged freely slideable along the tensile means.

Such a push belt, work piece or element therefore, processing tool and method for producing such a work piece or belt element is generally known, e.g. from EP-A-0.278.545 in the name of applicant. The publication refers to the so called saddle surface of the element that forms the bottom side of a slot or recess for receiving the tensile means, which saddle surface is most often and most intensively contacted by the tensile means during operation of the belt. Therefore, a relatively smooth area, rounded both in the longitudinal and in the transverse direction of the belt and free from burrs, is required at and around the saddle surface. With the processes of grinding or tumbling these features are normally attained. In order to favourably obviate, at least reduce the requirement for or extent of these processing steps, and to reduce manufacturing costs of the element, this publication proposes a manufacturing process for transverse elements in which the element is treated by a bevelled die, entering the recess from both sides of the element. In this way any remaining burrs on a peripheral edge part are removed or otherwise pressed into the material of the element, while the saddle surface is favourably brought towards a convex shape.

The proposed process is favourable in that burrs are removed from a peripheral edge part of the work piece, i.e. a part of the work piece where a main face of the work piece joins a laterally facing side surface thereof, whereby such main face and side surface are mutually oriented predominantly orthogonal, while also such laterally facing surface and in case of the belt element the saddle surface, may be brought into a favourable state. In particular in push belts the latter is favourable due to the critical nature of the contact between an element and a tensile means. The known process however is relatively disadvantageous since it is linked to a specific order of producing the work piece and since it requires a recess of a relatively large depth within the element near said surface for accommodating said burrs removed from the peripheral edge part. Also the shape of saddle surface so achieved may, as in the case of transverse elements, not be optimal for its operation within a transmission.

The present invention seeks to improve the proposed manufacturing method, thus to maintain, even increase the associated advantages thereof, while realising a properly produced work piece. According to the invention such is attained by applying the characterising features of claim 1.

With the manufacturing method according to the invention, a reliable manner of shaping a surface of a work piece according to a desired shape may be achieved. Moreover, the new manufacturing method may be applied independently from the type and order of a blanking or other process for forming the work piece from base material. By applying two central tool parts each engaging a main face of the work piece by exerting a pressure thereon, the work piece is gripped firmly and prevented from deforming in the direction of these tool parts. By pressure of a third peripheral tool part on the peripheral edge part of the work piece at one main face thereof, the peripheral tool part being urged in a direction in parallel with the said oppositely positioned and central tool parts and preferably straight guided by one of these, the peripheral edge part is plastically deformed, urging the material in a direction transverse to the pressing direction of the respective tool parts. A treatment with the above-described processing tool causes material of the work piece to flow towards a shaping wall part of the third peripheral tool part that is located close to the peripheral edge part to be treated, whereby such work piece and an laterally facing outer surface thereof, i.e. a surface oriented predominantly to a main face of the work piece, may be shaped in accordance with a desired shape.

In the process and processing tool according to the invention, with two tool parts working the same main face of a work piece in conjunction, while the peripheral tool part is urged into the work piece near a peripheral edge part thereof further than the associated central tool part, the invention favourably renders possible the deformation of material solely or at least predominantly at the said peripheral edge part thereof, thereby naturally shaping the said peripheral edge part in desired a rounded form as seen in a cross section thereof. Depending on the thickness of the work piece, in this way a fully rounded shape of the laterally facing surface occurs in a natural manner. This phenomenon is particularly utilised for shaping the profile or rounding of the saddle surface of a transverse element At the same time, a desired corrugated profile for the pulley contacting surfaces of the transverse element may be favourably shaped simultaneously by pressing material of the work piece into an shaping profile of a laterally facing shaping wall part of the peripheral tool part. Favourably, the process according to the invention may be applied irrespective of the blanking process or other work piece forming process.

The process is in particular favourable for transverse elements for push belts, where the invention takes advantage of material characteristics commonly used for such application, i.e. high carbon containing metal, and of the commonly applied element thickness, i.e. dimension in longitudinal direction of the belt, in combination with the amount of pressure applied by each of the central and peripheral tool parts, in most if not all cases renders a fully rounded peripheral edge part in particular at the location where the said saddle surface adjoins a main face of the element.

In a particular elaboration of the above manufacturing method according to the invention, the tools are adapted for optimal combination with a manufacturing method in which the work piece is formed from plate-like or strip-like base material using the known fine blanking process, whereby generally burrs are left on at least one main face of the element at its the peripheral edge part. The thus realised work piece is inserted in a processing tool according to the invention, provided with a peripheral tool part entirely enclosing the work piece and fittingly matching the outer periphery of a central tool part supporting and pressing the peripheral edge part of the work piece with burrs. In this manner favourable advantage is taken from the fact that the laterally facing surfaces of the fine blanked work piece are relatively smooth, and, moreover, that peripheral edge part of the respective other main face of the work piece opposite the said main face where the burrs are located is already curved with a desired radius as a result of the fine blanking process. This phenomenon of the other main face having rounded peripheral edges is alternatively denoted 'einzug'. By a close fitting of the peripheral tool part both with the work piece and with the central tool part and the supporting tool part, it is also prevented that laterally facing surfaces of the work piece, i.e. surfaces predominantly orthogonal to the main faces thereof, that are relatively hard after a fine blanking treatment would be insufficiently urged towards the shaping wall part of the peripheral tool part. The work piece achieved by this particular method shows a stepped recess of relatively slight depth into the work piece and of relatively small distance towards from the outer edges of the respective main face. According the invention the manufacturing method and processing tool are particularly suited for producing a transverse element for a push belt, in which case such stepped recess is in particular noticed along the so-called saddle surface of the element and/or near the pulley contacting surfaces of the element.

According to yet another particular elaboration of the new manufacturing method, the processing tool is specifically adapted for optimal combination with an ordinary, i.e. high speed and relatively rough blanking process or a process in which the work pieces are rough shaped from a blank by pressing in a forming process. According to this elaboration the opposite tool parts overlapping in the operational direction of pressing are provided with an outer contour providing for some mutual lateral play in a direction transverse to such pressing direction. In this manner a relatively rough work piece surface may be accommodated while still a desired shape matching the shaping wall of the peripheral or shaping tool part is achieved. The lateral play between the tool parts allows material to be expelled from the opening between the tool parts, so that the worked piece at a first main face thereof may show slightly raised edge along a so treated peripheral edge part. At another main face opposite said first main face, the work piece simultaneously shows a recess of at least comparable size in width and depth, so that when the work pieces are stacked or pushed against each other, any raised edge of said work piece are accommodated in the stepped recess of the neighbouring work piece.

In yet a further elaboration of this manufacturing method, the work piece is received in the processing tool with the receiving tool part having at least part of the tool surface, e.g. for receiving a main face of a work piece, under an angle to the plane transverse to the direction of pressing of the tool parts, i.e. transverse to the direction of any straight guide within the tool. In this manner, a problem is solved of using the press shaping method for enforcing a rounded peripheral edge, prescribed by the wall of the shaping tool part, on to the work piece. This feature is in particular favourable to enable the manufacturing of transverse elements of a push belt of which the saddle surface preferably is rounded both transversely and longitudinally.

It is remarked that all manufacturing methods so developed are in particular suited for manufacturing processes in which the work piece corresponds to the transverse element of a push belt. Such transverse elements are commonly manufactured applying a so called fine blanking process of which the tools are expensive in that they are highly accurate so as to perform a controlled cutting action on the work piece to be blanked rather than a partly cut and partly ripping of as at 'ordinary' blanking. In the latter process a relatively rough, less controlled shaping of the edge of a work piece is realised. However the latter process is relatively cheap since it can be done relatively at high speed and with long tool lifetime. The fine blanking process is relatively expensive since the tool is to be replaced relatively quickly. Inter alia it is remarked that in the art it is known that the main technical difference of the fine blanking process with respect to ordinary blanking, is the use of a supporting tool part for supporting the work piece during the blanking or cutting thereof by means of a cutting tool part, the work piece thereby effectively being clamped between the supporting tool and the cutting tool.

By applying the manufacturing method according to the present invention, it may favourably be realised that the ordinary blanking process may be applied for manufacturing transverse elements for push belt application.

The invention will now further be explained by way of examples specifically relating, but not limited, to work pieces in the shape of and suited as transverse elements for a push belt given in the accompanying drawings, wherein:
figure 1 is an illustration of a known work piece (1), in particular a transverse element of a metal push belt, known per se;
figure 2 forms an illustration of the prior art shaping of a peripheral part of an element according to figure 1;
figure 3 is a schematic illustration of the element and the processing pressing parts at producing the element;
figure 4 and 5 schematically represents a first preferred embodiment of the element and the processing tools together with a proceeding in the relevant processing step;
figure 6 schematically represents a detailed elaboration of the first preferred embodiment according to the invention;
figure 7 represents an outline of a saddle surface of the element realised in such first preferred embodiment of the processing tools according to the invention;
figure 8 in sectional view schematically represents a second preferred embodiment of the element and the processing tools according to the invention; and
figure 9 show the elements produced by the processing step of figure 8 as assembled in a push belt.

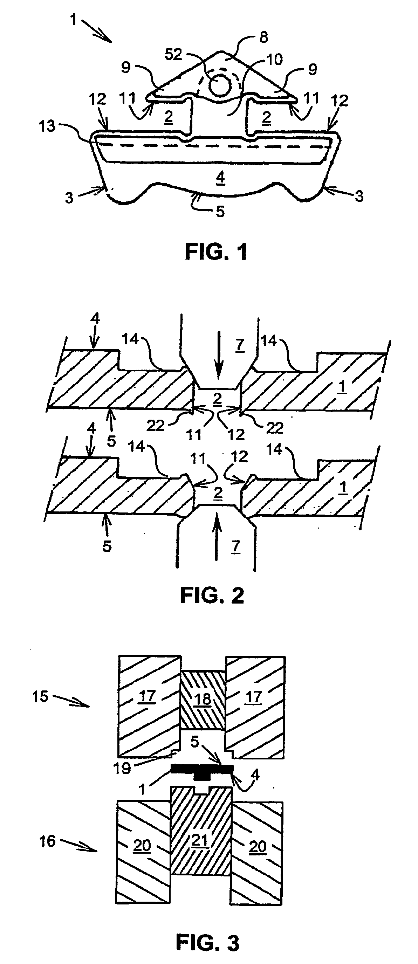

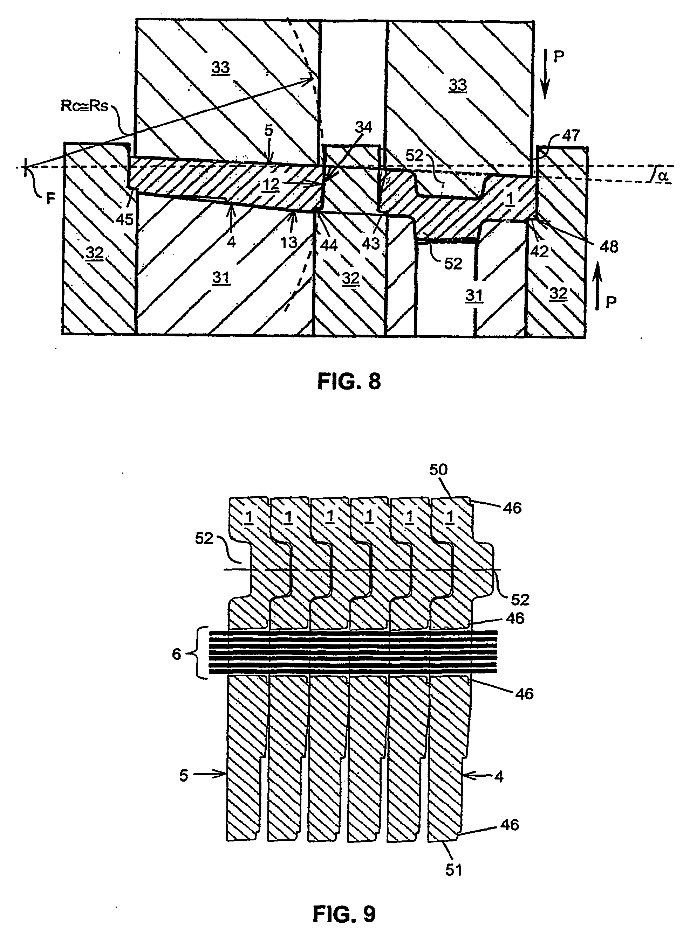

Figure 1 is a plan view of a metal work piece 1, in casu a transverse element 1 of a push belt known per se for continuously variable transmissions (CVT), not depicted in the drawing. It is commonly produced by way of blanking or fine blanking. It shows laterally facing surfaces 3 for contacting the sheaves of a pulley inherent to such push belt type continuously variable transmission. The laterally facing surfaces 3 or pulley contacting surfaces 3 are mutually disposed in a V-shape, which for an automotive application generally extends under an angle between 5 and 12 degrees, preferably 11 degrees. It is provided with a slotted recess 2 for width-wise receiving a part or whole of an endless tensile means 6 that is depicted only in figure 8. Generally the tensile means 6 consists of a plurality of nested metal hoops. Most of the operating time of the push belt the tensile means 6 bears on one laterally facing surface 12 of the slot 2, i.e. the so-called called saddle surface 12 of the element 1, which for that reason is preferably rounded and smooth. The rounding of this saddle surface 12 includes a slight convex rounding in a transverse direction with respect to the longitudinal of the belt wherein the element 1 is to be applied. This rounding preferably is of a very large radius up to 2 meter and is denoted the long saddle radius. Such feature contributes to a centred tracking of the tensile means 6 with respect to the saddle surface 12. In the longitudinal direction, i.e. transverse to the viewing direction in figure 1, the saddle surface 12 may also be slightly curved convex, preferably with a curvature having a radius, denoted as the short saddle radius Rs, which is preferably smaller than a minimum radius at which the push belt is bent in its longitudinal direction during operation in the transmission. Generally applicable values for the short saddle radius Rs range between 5 and 25 mm, preferably around 20 mm. In this manner a non-edged, smooth contact between the tensile element 6 and the saddle surface 12 is realised. Moreover, for the same purpose a roughness value R_{A} of the saddle surface 12 preferably is kept below 0.2 R_{A}. For preventing excessive wear, the material of the element 1 may further be hardened, preferably having the highest hardness at such saddle surface 12. These features are commonly realised by heat treating and stone tumbling after the general element shape has been produced by blanking or fine blanking. Slightly below the saddle surface 12, on a main face 4 of the element 1, a tilting line 13 is created in a manner known per se for enabling mutually contacting elements 1 to tilt, whereby the push belt may pass around an arc-shaped trajectory part within the pulley of the transmission.

In case of a so-called dual package push belt, of which the depicted element 1 is a part, the tensile means 6 consists of two pieces of nested hoops. Each is kept in place in a slot or recess 2, which extends laterally from a central body part 10, alternatively denoted neck part 10, located between the slots 2. The lower boundary of the slots 2 is mainly defined by a laterally facing lower surface 12, being the saddle surface 12 of the element 1. The upper boundary of the slots 2 is mainly defined by an upper surface 11 which pertains to a so called ear part 9 extending over the tensile means, preferably up to about one half of the width of the one such piece of nested hoops. The top or head part 8 of the element 1, located above the central body part 10 apart from the ear parts 9 also includes a notch 52 and a recess 53 pertaining thereto. The notch 52 and the recess 53 are located at opposite sides of the element 1, the former preferably being created by material removed from the recess 53 during blanking.

It is remarked that the pulley contacting surfaces 3 and the saddle surface 12 of the element 1 are jointly referred to as contacting surfaces 3,12.

Figure 2 represents a prior art bevelling operation known from EP-A-0.278.545, by which the saddle surface 12 is smoothened and more or less rounded by means of bevelled dies 7 entering the slot 2 between the upper surface 11 and the saddle surface 12. Any burr 22 still present at the edges of the saddle surface 12, is effectively eliminated by such process, either by it falling off, by it bending away from the saddle surface 12, or by it being pressed into the material of the element 1. A recessed part 14 being provided at blanking to enable the desired deformation, i.e. bevelling, of the saddle surface 12 as indicated in figure 2. By the entering of the bevelled dies 7 into the slot 2 and contacting and deforming the upper surface 11 and the saddle surface 12 of the element, the generally preferred hard, smooth and somewhat convex shape of the saddle surface 12 may be realised without further treatment being required.

The present invention seeks to further develop and improve this known finishing process in an alternative manner, in particular allowing a more favourable element design by obviating the requirement of said recessed part 14.

One such alternative manner according to the invention is schematically shown in figure 3, which is preferably combined with a fine blanking process and which is particularly suited for treating work pieces such as the said transverse elements 1 for push belt application. After being fine blanked the element 1 is moved and positioned between tool parts 15 and 16 of a processing tool, possibly within a single manufacturing apparatus, whereby such apparatus is provided with a press system that incorporates both a forming tool for forming the elements 1 form base material, such as a blanking tool used in the fine blanking process, and the processing tool. The tool parts 15 and 16 of the processing tool are jointly referred to as a stamping press 15,16. The tool parts 15 and 16 of the stamping press 15,16 treat the element 1 at its opposite main faces 4 and 5, whereby each tool part 15 or 16 is divided into two parts, viz. a peripheral and a central part. In case In the present example the upper tool part 15 comprises an upper peripheral press part 17 that entirely surrounds an upper central press part 18, whereas the lower tool part 16 comprises an lower peripheral press part 20 that entirely surrounds an lower central press part 21. The peripheral press parts 17, 20 during operation of the stamping press function amongst others as a straight guide for the central press parts 18, 21. Both the central and the peripheral parts 18, 21, 17 and 20 of the stamping press 15,16 essentially show, when taken in plan view, the contour of the element 1. In the upper peripheral press part 17 this is preferably realised in a recess 19 in which the element 1 may be accommodated. The contour of the upper central press part 18 thus being slightly shrunken compared to that of the element 1. Figure 3 further shows that the lower central press part 21 matches the outer contour of the element 1 which corresponds to the outer contour of the recess 19 in the upper peripheral press part 17.

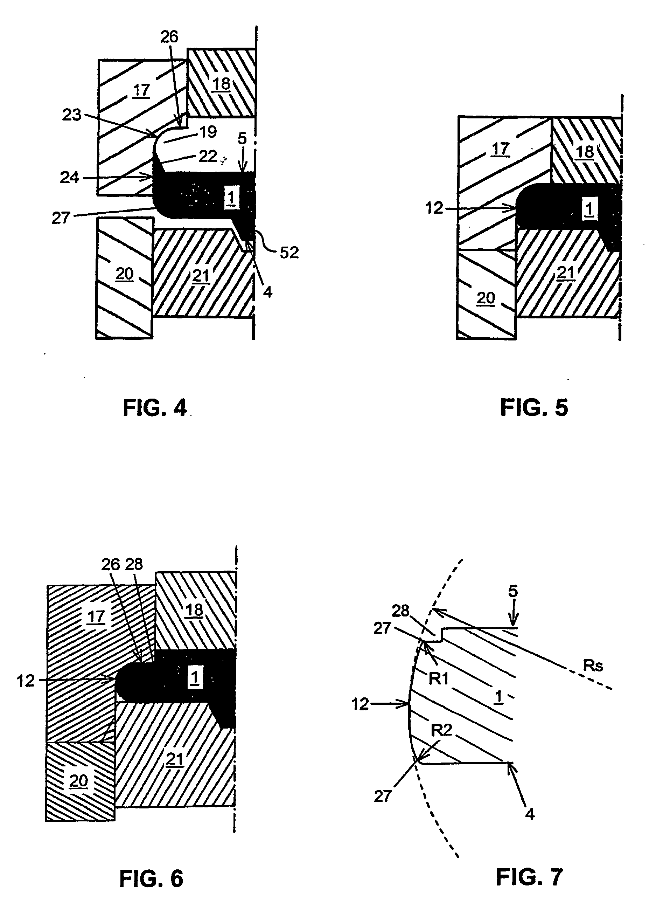

As is shown schematically in more detail in figure 4, the recess 19 is in accordance with the invention provided with two wall parts 23 and 24, both at least partly facing laterally, which are formed according to the requirement for the shape of the relevant contacting surface 3,12 of the element 1. The wall part 23 is shaped concave having an arc-like shape in cross section and is designed to bend or otherwise deform the burr 22 present on the peripheral edge parts of the element 1 by the blanking process. It is further indicated that an peripheral edge part 27 of the main face 4 of element 1 opposite the main face 5 bearing the burr 22 generally has a curved shape also as a result of the blanking process, which phenomenon is generally referred to as 'einzug'. According to the invention, at moving the tool parts 15 and 16 towards each other by applying pressure to one or more of the stamping press parts 17, 18, 20 and 21 thereof in a mutually co-ordinated manner, the burr 22 may be folded in a direction generally away from the saddle surface 12 and, preferably, pressed into the material of the element 1, whereby at the same time the desired shape of the saddle surface 12 is advantageously provided by deformation. The result of such action is illustrated in figure 5 and has caused material of the element 1 to flow in a lateral direction with respect to the movement of the stamping press parts 17, 18, 20 and 21, thereby adopting a naturally bulged or convex shape at the saddle surface 12 of the element 1. It is a merit of the present invention to have discovered that such natural bulging may favourably be used to form a smooth and rounded saddle surface 12. It is a further merit of the invention to have developed a so-called stamping process and stamping press 15,16 for favourably taking advantage of such phenomenon in combination with a process for forming elements 1 for a push belt, in particular a fine blanking process.

In further development of the stamping process shown in figure 6, the upper peripheral stamping press part 17 is provided with a third wall part 26 adjoining the said arc-shaped wall part 23 and extending in lateral direction therefrom generally facing in the pressing direction. During stamping the such shaped upper peripheral press part 17 penetrates the material of the elements 1 slightly farther than the upper central press part 18, such that a stepped recess 28 is formed in a main face 5 of the element 1 along its entire peripheral edge part. According to the invention this has the significant advantage the burr 22 or any remnants thereof left after the stamping process may be received in such stepped recess 28, such that contact between the burr 22 and either the tensile means 6 or an adjacent element 1 is advantageously avoided when the element 1 is applied and operated in the push belt. Moreover, the material removed to form the stepped recess 28 is advantageously available for realising a relatively large bulging effect of the saddle surface 12.

According to further modifications of the stamping process, not shown in figure 6, the laterally facing wall part 24 of the recess 19 in the upper peripheral press part 17 may be shaped slightly conical, possibly rounded, with a relatively large radius of curvature, i.e. more or less cup shaped. In both cases, the laterally facing wall part 24 is shaped such that it diverges in a direction away form the rounded wall part 23, such that the saddle surface 12 is formed slightly rounded, preferably somewhat elliptically. Such wall part 24 shapes were found to promote the said bulging effect.

It is noted that all of these modifications, as well as other parameters of the stamping process, such as the pressures applied to the respective stamping press parts 17, 18, 20 and 21, may have an influence on the product obtained. The realisation of this feature, and the realisation that a naturally shaped bulging in a lateral direction may be attained may lead to a consequent adaptation of the upper pressing tool part 15, more in particular of the said conical shape of the laterally facing wall part 24. This allows a desired bulging to be obtained, e.g. one that approximates a near elliptical shape. In case of the saddle surface 12 the desired radius of curvature of an arc that forms an approximation of such near elliptical shape, i.e. the short saddle radius Rs, is favourably shaped in accordance with the tribology requirements posed thereon. Details of such requirements are provided by the relevant patent applications in the name of applicant, e.g. EP-00204817. An evenly bulging out of the element 1 is thereby somewhat enhanced by the circumstance that the element 1 is produced of a relatively high carbon steel type. In the phenomenon taken into industrialisation by the present invention, a further advantage exists in that by the exertion of additional pressure after blanking of the element 1, the relevant contacting surface 3,12 is favourably slightly hardened during the stamping process.

Figure 7 illustrates a cross sectional shape of the saddle surface 12 attainable with the stamping process and the coining-like processes according to the invention. The figure shows the stepped recess 28, preferably having a depth, i.e. the dimension of the recess 28 in longitudinal direction, of 5 µm to 50 µm and a width of 0.1 mm to 0.5 mm, i.e. the in transverse dimension of the recess 28, the short saddle radius Rs preferably having a value of 5 mm to 25 mm, and rounded peripheral edge parts 27 having relatively small radii curvature R1 and R2, preferably between 0.2 mm to 0.5 mm. As mentioned earlier, the rounded edge part 27 defined by the radius R2 is to some extent shaped in the blanking process for forming the elements, i.e. the so-called einzug phenomenon.

A further alternative manner realising the invention is schematically shown in figure 8. In this example it is shown how the principle is used to make an ordinary blanking process, in itself insufficiently accurate for producing work pieces 1 such as transverse elements 1 for push belts application, feasible for producing the same. This implementation of the invention is referred to as the coining-like process.

After blanking, the element 1 is inserted in the processing tool according to the invention referred to in this alternative manner as a coining tool 31,32,33. The coining tool 31,32,33 consists of a first tool part 31,32 fittingly receiving the element 1 by engaging one of the main faces 4 or 5 thereof, and a second tool part or central pressing part 33 for pressing on the respective other main face 5, 4 of the element 1. The first tool part 31,32 consists of a peripheral receiving and shaping part 32 and a central counter pressing part 31, straight guided in the shaping part 32 and counter pressing the element 1. Inner wall parts of the shaping section 32 are shaped in accordance with the ideal, i.e. desired shape of the element 1. After the element is inserted, i.e. received in the first tool part 31,32, the pressing part 33 is brought into a contacting position with the element 1, and subsequently pressure is applied thereto so as to plastically deform the element 1, and to urge the material thereof to flow in a substantially lateral direction with respect to the movement of the pressing part 33, referred to here as the pressing direction P, where the material is received by the shaping part 32 and thereby urged into the shape defined by this part 32. With such process a pattern of parallel ridges and grooves each oriented in the pressing direction, which pattern is generally applied on the pulley contacting surfaces 3 of belt elements 1, may be advantageously created by the said lateral flow of material when the shaping part 32 is shaped to define such pattern.

Rather than for substantially circular work pieces 1, which are easy to treat as regards to an overall decrease of thickness by a central pressing action on the work piece 1, the current process is specifically adapted for processing relatively complicatedly shaped work pieces 1 such as transverse elements for push belt application, simultaneously deburring and shaping one or more surfaces 3,4,5, 12 and the peripheral edge parts thereof.

It would appear that a ridge or other type of profiling oriented transversely to the said pressing direction, such as the desired convex curvature of the saddle surface 12 in longitudinal direction as defined by the said short saddle radius Rs, can not normally be created with the coining-like process, because such profile would interlock with the shaping part 32 and prevent removal of the element 1 form the coining tool 31,32,33. According to the invention, however, in a further elaboration of the coining tool at least such longitudinal curvature of the saddle surface 12 may still be advantageously formed. According to the invention, the coining tool is shaped such that the element 1 is received by the first tool part not exactly transverse to the pressing direction, but under a slight angle α therewith, as is indicated in figure 8. The counter pressing part 31 of the coining tool 31,32,33 thereto essentially defining a flat plane positioned obliquely relative to a imaginary surface oriented perpendicular to the pressing direction.

This feature allows a saddle shaping part 34 of the shaping part 32 to be provided with a concave curvature, curved according to a radius Rc, with the radius Rc being of a value suitable for realising a desired convex shape of the saddle surface 12 and with its fulcrum point F lying flush with or, as seen in a direction from the counter pressing part 31 to the pressing part 33, possibly slightly beyond an edge of the saddle surface 12 on the side of the element 1 closest to the pressing part 33. In this manner, it has become possible to provide a desired curved shape of the saddle surface 12 of an element 1 without having the interlocking problem after pressing, such that the element 1 may be removed form the coining tool 31,32,33 without disturbing or deforming its defined shape. For putting into practice this principle according to the invention, the angle *α*, the radius Rc, its fulcrum point F and the width of the element 1 at the saddle surface 12 thereof are set into appropriate relation according to the common mathematical laws.

During the coining-like process the shaping tool part 32 may be slightly urged relative to the counter pressing part 31, in a direction towards the pressing part 33. Hereby an additional pressure is created in the element 1 in regions near its contacting surfaces 3,12 such as the saddle surface 12 and the pulley contacting surfaces 3, partly causing the element material to acquire some of the hardness ultimately required.

Furthermore, the coining tool 31,32,33 may be shaped and positioned such that the shaping part 32 is provided with resting edges 42 to 45, whereby during the coining-like process the element 1 is provided with a small indentation or stepped recess 46 along its peripheral edge part as is indicated in figure 9. When the element 1 is used and operated in the push belt, such stepped recess 46 provides a space for accommodating any burr or burr remnants of an adjoining element 1.

The stepped recess 46 also allows the coining-like process to be favourably adapted such that a noticeable gap is left between the shaping part 32 and the pressing part 33, e.g. at the location of reference numeral 47. In itself this feature has the advantages that a proper filling of the shaping section 32, i.e. shaping of the element 1, may be assured even in corners thereof, because an overflow of material is allowed through the gap. When the element 1 is used in the push belt, such stepped recess 46 provides a space for accommodating material that has entered such, gap, which defines a raised edge on the entire peripheral edge part of the relevant main face of the element 1. In practice, the amount of such overflow and thus the height of the raised edge is substantially less than the actual volume of the material removed to form the stepped recess 46, since the nature of the coining-like process causes the material to flow towards the walls of shaping tool part 32, i.e. substantially in a transverse direction, completely filling the shape defined by this tool part 32 essentially before any overflow will occur. In a further development of the above adaptation of the coining-like process according to the invention, the width of the gap is set at least slightly less then the width of the resting edges 42-45. In this manner it is ensured that at all times the said raised edge can be accommodated in space provided by the stepped recess 46.

A further advantage of the stepped recess 46 is that during the coining process the mutual relative movement of the shaping part 32 and the counter pressing part 31 can be accurately determined and/or controlled. Therefore, this mutual movement forms a suitable and convenient parameter for process control.

The resting edges 42, 43, 44 and 45, preferably at least of the part 34 for shaping the saddle surface 12 of the element 1, are provided with an appropriate and favourably rounded transition edges, e.g. transition edge 48, so as to create a desired rounding of the element's peripheral edge parts where a main face 4 or 5 adjoins a laterally facing surface of the element 1 such as the contacting surfaces 3,12. In particular where a main faces 4,5 joins the saddle surface 12, such desired rounding may be set relatively large, preferably having a radius of more than 0.2 mm, more preferably between 0.3 mm and 0.5 mm.

In case of the element 1 for use in the push belt, it may according to the invention be preferred that the element 1 faces downwards in the coining tool 31,32,33, i.e. its notch 52 engaging the counter pressing part 31. Hereby the outer surface of such counter pressing part 31 facing the element 1 is provided with a suitable shape, e.g. for forming the tilting edge 13 on the element front main face 4 or, if such tilting edge 13 is already present on a main face 4 or 5 of the element 1, for accommodating the tilting edge 13, while maintaining or optimising its predefined shape during the coining process.

Figure 9 shows the effect of the manufacturing principle according to figure 8 with a number of elements 1 depicted in a sectional view of a push belt into which it is mounted. In the figure, the tensile means 6 of such push belt extends into the longitudinal direction thereof. It can be seen that as a result of the coining-like process according to the invention at least an upper outer surface 50 and a lower outer surface 51 of the elements 1 are oriented under a small angle relative to the longitudinal direction of the belt. Additionally, the general direction in which the notch 52 and recess 53 extend is specifically designed and manufactured to be oriented in longitudinal direction when applied in the belt, because such feature serves the proper functioning of the push belt. On close observation it may be recognised that such general direction in which the notch 52 and recess 53 extend is adapted to be.oriented not exactly parallel to e.g. the upper outer surface 50, but oriented slightly downward towards the lower outer surface 51. Thus, for instance, the recess 53 is not oriented exactly transverse to the back principle face 5.

It is remarked that the treatment by any of the above examples of putting the principle according to the invention into practice, realises smoothly shaped contacting surfaces 3,12 with very low values of surface roughness, and possibly with a hardening effect. Therefore subsequent element deburring or shaping treatments such as grinding or stone tumbling as commonly performed for shaping, smoothening or hardening may be performed to a lesser extent, or may become entirely superfluous. The process according to the invention is favourable in that it can easily be combined with the known fine blanking process or even with the relatively cheaper ordinary blanking process. Apart from elements for push belts, the current process may be applied for any work piece to be produced in industry, in particular for high grade and high precision work pieces. Moreover, according to the invention the measure and means to exert a pressure on or relatively displace the tools and tool parts according to the invention are considered known or readily conceivable and may for example be copied from the known fine blanking machine.

Further, the invention relates to all self-explanatory details of the drawing not mentioned in the description and to all features described by the following set of claims.

## Claims

1. Manufacturing method for a work piece (1), preferably of a substantially flat nature such as the transverse elements of a push belt, in which method the work piece (1) in a first manufacturing step is formed into an intermediate state, **characterised in that** the work piece in a second manufacturing step is introduced into a processing tool (15,16;31,32,33) in which it is engaged at two opposite sides by machining parts (18,21;31,33), at least maintaining the work piece (1) in a fixed position, preferably under the exertion of predefined pressure, and in which in a third manufacturing step a peripheral edge part of the work piece (1) is engaged by a third machining part (17;32) peripheral to one of said oppositely engaging machining parts (18,21;31;33), in which third manufacturing step at least one of the said machining parts (17,18,21;31,32,33) is urged towards the work piece (1) along a pressing direction, whereby material of the work piece (1) under influence of pressure exerted by the engagement of the said at least one machining parts (17,18,21;31,32,33) plastically deforms and at least partly flows into a direction substantially transverse to the pressing direction.

2. Manufacturing method according to claim 1, wherein a fourth machining part (20) limits the engagement of the work piece (1) by the third machining part (17:32) in the pressing direction relative to the other machining parts (18,21;31;33).

3. Manufacturing method according to claim 1 or 2, wherein the third machining part (17;32) comprises a wall part or edge (23,26;42,43,44,45) at least partly extending substantially parallel to a main face (4, 5) of the work piece (1) when engaged by the other machining parts (18,21;31,33).

4. Manufacturing method according to claim 1, 2 or 3, wherein the third machining part (17;32) engages the work piece (1) to such an extend that a stepped recess (28;46) is provided at the peripheral edge part of the work piece (1).

5. Manufacturing method according to any one of the preceding claims, wherein the work piece (1) is de-burred in said third manufacturing step.

6. Manufacturing method according to any one of the preceding claims, whereby the work piece (1) is provided with two main faces (4,5) mutually oriented predominantly parallel and at least one contacting surface (3;12) extending between said main faces (4,5) predominantly transversely thereto, wherein the contacting surface (3;12) is provided with a rounding or other profile in said third manufacturing step.

7. Method of manufacturing a work piece (1) provided with two main faces (4,5) mutually oriented predominantly parallel and at least one contacting surface (3;12) extending between said main faces (4,5) predominantly transversely thereto, according to any of the preceding claims, in which method the work piece (1) in a first processing step is formed according to a fine blanking process into an intermediate state, at least one main face (5) of the work piece (1) thereafter showing a burred peripheral edge part, in which in a second processing step the work piece (1) is received and taken up in a processing tool (15,16), alternatively denoted stamping press (15,16), with an upper central press part (18) and lower central press part (21), each central press part (18;21) engaging a main face (4;5) of work piece (1), and in which the main face (5) of the work piece (1) showing the burred peripheral edge part in a third manufacturing step is engaged at its burred peripheral edge part by an upper peripheral press part (17) peripheral to the upper press part (18), whereby burrs of said burred peripheral edge part are bent away from the contacting surface (3;12), guided by a concave wall part (23) of the upper peripheral press part (17), and, subsequently, at further engagement of the upper peripheral press part (17), are pressed into the material of the work piece (1).

8. Method of manufacturing a work piece (1) according to claim 7, wherein in the third manufacturing step the contacting surface (3;12) is provided with a rounding or other profile, which profile is formed by material of the work piece (1) under influence of pressure exerted by the engagement of said third machining part (17;32) plastically deforming and at least partly flowing into a direction substantially transversely to a direction of engagement of the upper peripheral press part (17).

9. Method of manufacturing a work piece (1) according to claim 7 or 8, wherein in the third manufacturing step the upper peripheral press part (17) engages the work piece (1) to such an extent that a stepped recess (28;46) is formed on the peripheral edge part of the work piece (1).

10. Method of manufacturing a work piece (1) provided with two main faces (4,5) mutually oriented predominantly parallel and at least one contacting surface (3;12) extending between said main faces (4,5) predominantly transversely thereto, according to any of the claims 1-6, in which method the work piece (1) in a first processing step is formed according to an ordinary blanking process into an intermediate state, in which in a second manufacturing step the work piece (1) is received and taken up in a introduced into a processing tool (31,32,33), alternatively denoted coining tool (31,32,33) with a central pressing part (33), a central counter pressing part (31), each pressing parts (31,33) engaging a main face (4;5) of work piece (1) and a shaping part (32) peripheral to said central counter pressing part (31), and in which in a third manufacturing step one of said main faces (4,5) of the work piece (1) is engaged at a peripheral edge part by the shaping part (32) to such an extend that material of the work piece (1) under influence of pressure exerted by the engagement of at least the central pressing part (33) plastically deforms and at least partly flows into a direction substantially transverse to a direction of engagement of the central pressing part (33) towards the shaping part (32), thereby defining the shape of the contacting surface (3;12).

11. Method of manufacturing a work piece (1) according to claim 10, wherein in the third manufacturing step the central pressing part (33) engages the work piece (1) to such an extent that a stepped recess (28;46) is formed on the peripheral edge part of the main face (4) of the work piece (1) received by the central counter pressing part (31)

12. Method of manufacturing a work piece (1) according to claim 10 or 11, wherein in the third manufacturing step material of the work piece (1) is allowed to flow between the central pressing part (33) and the shaping part (32), providing the work piece (1) with a raised edge on its peripheral edge part.

13. Method of manufacturing a work piece (1) according to claim 10, 11 or 12, wherein the direction of engagement of the central pressing part (33) is oriented predominantly, but not exactly perpendicular to at least one of said main faces (5) of the work piece (1).

14. Processing tool for processing a work piece (1) provided with two main faces (4,5) mutually oriented predominantly parallel and at least one contacting surface (3;12) extending between said main faces (4,5) predominantly transversely thereto for realising the method according to any one of the claims 1 to 13, comprising a first machining part (18;31) and a second machining part (21;33) for pressingly engaging the main faces (4,5) of the work piece (1) on mutually opposite sides thereof, **characterised in that** the tool is provided with a third machining part (17;32) peripheral to either one of the first and the second machining parts (18,21;31,33) for pressingly engaging a peripheral edge part of one main face (4,5) of the work piece (1).

15. Processing tool according to daim 14, **characterised in that** the tool is provided with a fourth machining part (20) peripheral to the respective other one of the first and the second machining parts (18,21;31,33) for limiting the movement of the third machining part (17;32).

16. Processing tool according to claim 14 or 15, **characterised in that** the first and the second machining parts (18,21;31,33) for engaging a main face (4,5) of the work piece (1) are each provided with an engagement surface substantially matching at least a relevant part of one of the main faces (4,5) of to work piece (1) to be processed.

17. Processing tool according to claim 16, **characterised in that** the engagement surface of at least one the said first and the second machining parts (18,21;31,33) is facing predominantly, but not exactly in parallel with a general direction of engagement of the engaging machining parts (17,18,21;31,32,33).

18. Processing tool according to any one of the claim 14-17, **characterised in that** a noticeable gap, i.e. an amount of lateral play is present between the third machining part (17;32) and at least one of the first or the second machining part (18,21;31,33).

19. Processing tool according to any one of the claim 14-18, **characterised in that** the third machining part (17;32) comprises a recess (19) showing at least a curved wall part (23) and a laterally facing wall part (24).

20. Processing tool according to claim 19, **characterised in that** the recess (19) further shows a third wall part (26) adjoining the said arc-shaped wall part (23) and extending in lateral direction therefrom for providing a main face (5) of to work piece (1) with a stepped recess (28;46).

21. Processing tool according to claim 19 or 20, **characterised in that** the laterally facing wall part (24) is shaped conical.

22. Processing tool according to any one of the claim 14-18, **characterised in that** the third machining part (17;32) is provided with a laterally facing surface part defining a pattern of ridges and grooves.

23. Processing tool according to claim 22, **characterised in that** the third machining part (17;32) is provided with resting edges (42-45) for providing a main face (5) of to work piece (1) with a stepped recess (28;46)

24. Processing tool according to claim 22 or 23, **characterised in that** the third machining part (17;32) is provided with a saddle shaping part (34), which part (34) is shaped concave such that it continuously converges in a direction by which the work piece (1) is received in the processing tool.

25. Press system incorporating both a forming tool, such as a blanking press, for forming a work piece (1) with a defined form from plate-like or strip-like base material and the processing tool (15,16;31,32,33) according to any one of the claims 14 to 24.

26. Press system according to claim 25, **characterised in that** the work piece (1) is transferred from said forming tool to the processing tool (15,16;31,32,33) supported by said base material from which it has been formed.

27. Work piece (1) realised in accordance with the manufacturing method according to any one the claims 1 to 13, more in particular a transverse metal element (1) for use in a push belt for use in a continuously variable transmission for motorised vehicles, which push belt further comprises an endless tensile means (6) possibly composed of a plurality of nested metal hoops and whereby said transverse metal elements (1) are arranged freely moveable along the contour of said endless tensile means (6), which work piece (1) shows main faces (4,5) and a contacting surface (12), in particular a saddle surface (12) for contacting said endless tensile means (6), which contacting surface (12) is oriented predominantly orthogonal relative to said main faces (4,5) and is required to be shaped relatively smooth and slightly rounded so as to prevent the presence of sharp edges in a possible contact with another part in an assembly of parts including the work piece (1), **characterised in that** a main face (4;5) of the work piece (1) is provided with a stepped recess (28;46) along at least a part of its peripheral edge part.

28. Work piece (1) according to claim 27, **characterised in that** the depth of the stepped recess (28;46), i.e. its dimension in a direction perpendicular to a main face (4,5) of the work piece (1) is about 5 to 50 µm.

29. Work piece (1) according to claim 27 or 28, **characterised in that** the width of the stepped recess (28;46), i.e. smallest dimension in a plane parallel to a main face (4,5) of the work piece (1) is about 0.1 to 0.5 mm.

30. Work piece (1) according claim 27, 28 or 29, **characterised in that** the contacting surface (12) is curved in two mutually perpendicular directions, whereby radius of curvature in at least one of said directions is about 5 to 25 mm.

31. Work piece (1) according any one the claims 27 to 30, **characterised in that** a main face (4;5) of the work piece (1) is provided with a raised edge along at least a part of its peripheral edge part.

32. Work piece (1) according to any one of the claims 27 to 31, **characterised in that** the work piece (1) is further provided with outer surface (50,51) oriented predominantly, but not exactly orthogonal to at least one main face (5) of the element (1).

33. Metal push belt for a continuous variable transmission comprising a transverse element (1) defined as the work piece according to any one of the claims 27 to 32.

## Patentansprüche

1. Herstellungsverfahren für ein Werkstück (1), vorzugsweise von im Wesentlichen flacher Art, wie zum Beispiel von Querelementen eines Schubriemens, bei dem das Werkstück (1) in einem ersten Herstellungsschritt zu einem Zwischenzustand geformt wird, **dadurch gekennzeichnet, dass** das Werkstück in einem zweiten Herstellungsschritt in ein Bearbeitungswerkzeug (15, 16; 31, 32, 33) eingeführt wird, in dem es an zwei gegenüberliegenden Seiten durch Bearbeitungsteile (18, 21; 31, 33) in Eingriff genommen wird, die das Werkstück (1), vorzugsweise unter Ausübung eines vordefinierten Drucks, in einer festgelegten Position zumindest halten, und wobei in einem dritten Herstellungsschritt ein Umfangsrandteil des Werkstücks (1) durch ein drittes Bearbeitungsteil (17; 32) in Eingriff genommen wird, das bezüglich eines der einander gegenüberliegend eingreifenden Bearbeitungsteile (18, 21; 31, 33) am Umfang liegt, wobei in dem dritten Herstellungsschritt mindestens eines der Bearbeitungsteile (17, 18, 21; 31, 32, 33) entlang einer Pressrichtung zum Werkstück (1) gedrückt wird, wodurch unter Einfluss von durch den Eingriff des mindestens einen Bearbeitungsteils (17, 18, 21; 31, 32, 33) ausgeübten Druck Material des Werkstücks (1) plastisch verformt wird und zumindest teilweise in einer im wesentlichen quer zur Pressrichtung verlaufenden Richtung fließt.

2. Herstellungsverfahren nach Anspruch 1, bei dem ein viertes Bearbeitungsteil (20) den Eingriff des Werkstücks (1) durch das dritte Bearbeitungsteil (17; 32) in Pressrichtung bezüglich der anderen Bearbeitungsteile (18, 21; 31, 33) begrenzt.

3. Herstellungsverfahren nach Anspruch 1 oder 2, bei dem das dritte Bearbeitungsteil (17; 23) einen Wandteil oder Rand (23, 26; 42, 43, 44, 45) umfasst, der sich zumindest teilweise im Wesentlichen parallel zu einer Hauptfläche (4, 5) des Werkstücks (1) erstreckt, wenn es durch die anderen Bearbeitungsteile (18, 21; 31, 33) in Eingriff genommen wird.

4. Herstellungsverfahren nach Anspruch 1, 2 oder 3, bei dem das dritte Bearbeitungsteil (17; 32) das Werkstück (1) in solch einem Ausmaß in Eingriff nimmt, dass am Umfangsrandteil des Werkstücks (1) eine abgestufte Ausnehmung (28; 46) vorgesehen wird.

5. Herstellungsverfahren nach einem der vorhergehenden Ansprüche, bei dem das Werkstück (1) in dem dritten Herstellungsschritt entgratet wird.

6. Herstellungsverfahren nach einem der vorhergehenden Ansprüche, bei dem das Werkstück (1) mit zwei Hauptflächen (4, 5), die in erster Linie parallel zueinander ausgerichtet sind, und mindestens einer Berührungsfläche (3; 12), die sich zwischen den Hauptflächen (4, 5) in erster Linie quer dazu erstreckt, versehen ist, wobei die Berührungsfläche (3; 12) in dem dritten Herstellungsschritt mit einem abgerundeten oder anderen Profil versehen wird.

7. Verfahren zur Herstellung eines Werkstücks (1), das mit zwei Hauptflächen (4, 5), die in erster Linie parallel zueinander ausgerichtet sind, und einer Berührungsfläche, (3; 12), die sich zwischen den Hauptflächen (4, 5) in erster Linie quer dazu erstreckt, versehen ist, gemäß einem der vorhergehenden Ansprüche, bei dem das Werkstück (1) in einem ersten Bearbeitungsschritt gemäß einem Feinstanzprozess zu einem Zwischenzustand geformt wird, wobei danach mindestens eine Hauptfläche (5) des Werkstücks (1) einen Grat aufweisenden Umfangsrandteil aufweist, wobei in einem zweiten Bearbeitungsschritt das Werkstück (1) in einem auch als Stanzpresse (15, 16) bezeichneten Bearbeitungswerkzeug (15, 16) aufgenommen und empfangen wird, das ein oberes mittleres Pressenteil (18) und ein unteres mittleres Pressenteil (21) aufweist, wobei jedes mittlere Pressenteil (18; 21) eine Hauptfläche (4; 5) des Werkstücks (1) in Eingriff nimmt, und wobei die Hauptfläche (5) des Werkstücks (1), die den Grat aufweisenden Umfangsrandteil aufweist, in einem dritten Herstellungsschritt an ihrem den Grat aufweisenden Umfangsrandteil durch ein oberes Umfangspressenteil (17), das bezüglich des oberen Pressenteils (18) am Umfang liegt, in Eingriff genommen wird, wodurch Grat des Grat aufweisenden Umfangsrandteils von der Berührungsfläche (3; 12) weggebogen wird, durch einen konkaven Wandteil (23) des oberen Umfangspressenteils (17) geführt wird und anschließend bei weiterem Eingriff des oberen Umfangspressenteils (17) in das Material des Werkstücks (1) gepresst wird.

8. Verfahren zur Herstellung eines Werkstücks (1) nach Anspruch 7, bei dem im dritten Herstellungsschritt die Berührungsfläche (3; 12) mit einem abgerundeten oder anderen Profil versehen wird, das **dadurch** gebildet wird, dass sich Material des Werkstücks (1) unter Einfluss von durch Eingriff des dritten Bearbeitungsteils (17; 32) ausgeübtem Druck plastisch verformt und zumindest teilweise in einer im Wesentlichen quer zu einer Eingriffsrichtung des oberen Umfangspressenteils (17) verlaufenden Richtung fließt.

9. Verfahren zur Herstellung eines Werkstücks (1) nach Anspruch 7 oder 8, bei dem in dem dritten Herstellungsschritt das obere Umfangspressenteil (17) das Werkstück (1) in solch einem Ausmaß in Eingriff nimmt, dass am Umfangsrandteil des Werkstücks (1) eine abgestufte Ausnehmung (28; 46) gebildet wird.

10. Verfahren zur Herstellung eines Werkstücks (1), das mit zwei in erster Linie parallel zueinander ausgerichteten Hauptflächen (4, 5) und mindestens einer sich zwischen den Hauptflächen (4, 5) in erster Linie quer dazu erstreckenden Berührungsfläche (3; 12) versehen ist, nach einem der Ansprüche 1 - 6, bei dem das Werkstück (1) in einem ersten Bearbeitungsschritt gemäß einem gewöhnlichen Stanzprozess zu einem Zwischenzustand geformt wird, wobei in einem zweiten Bearbeitungsschritt das Werkstück (1) in einem auch als Prägewerkzeug (31, 32, 33) bezeichneten Bearbeitungswerkzeug (31, 32, 33) aufgenommen und empfangen wird, das ein mittleres Pressenteil (33), ein mittleres Gegenpressenteil (31), wobei jedes Pressenteil (31, 33) eine Hauptfläche (4; 5) des Werkstücks (1) in Eingriff nimmt, und ein am Umfang des mittleren Gegenpressenteils (31) liegendes Formteil (32) aufweist, und wobei in einem dritten Herstellungsschritt eine der Hauptflächen (4, 5) des Werkstücks (1) durch das Formteil (32) in solch einem Ausmaß in Eingriff genommen wird, dass Material des Werkstücks (1) unter Einfluss von durch den Eingriff mindestens des mittleren Pressenteils (33) ausgeübten Druck plastisch verformt wird und zumindest teilweise in einer quer zur Eingriffsrichtung des mittleren Pressenteils (33) verlaufenden Richtung zum Formteil (32) fließt, wodurch die Form der Berührungsfläche (3; 12) definiert wird.

11. Verfahren zur Herstellung eines Werkstücks (1) nach Anspruch 10, bei dem im dritten Herstellungsschritt das mittlere Pressenteil (33) das Werkstück (1) in solch einem Ausmaß in Eingriff nimmt, dass am Umfangsrandteil der Hauptfläche (4) des Werkstücks (1), der von dem mittleren Gegenpressenteil (31) aufgenommen wird, eine abgestufte Ausnehmung (28; 46) gebildet wird.

12. Verfahren zur Herstellung eines Werkstücks (1) nach Anspruch 10 oder 11, bei dem im dritten Herstellungsschritt gestattet wird, dass Material des Werkstücks (1) zwischen dem mittleren Pressenteil (33) und dem Formteil (32) fließt, wodurch das Werkstück (1) an seinem Umfangsrandteil mit einem erhabenen Rand versehen wird.

13. Verfahren zur Herstellung eines Werkstücks (1) nach Anspruch 10, 11 oder 12, bei dem die Eingriffsrichtung des mittleren Pressenteils (33) in erster Linie, aber nicht genau, senkrecht zu mindestens einer der Hauptflächen (5) des Werkstücks (1) ausgerichtet ist.

14. Bearbeitungswerkzeug zur Bearbeitung eines Werkstücks (1), das mit zwei Hauptflächen (4, 5), die in erster Linie parallel zueinander ausgerichtet sind, und mindestens einer sich zwischen den Hauptflächen (4, 5) in erster Linie quer dazu erstreckenden Berührungsfläche (3; 12) versehen ist, zur Durchführung des Verfahrens nach einem der Ansprüche 1 bis 13, mit einem ersten Bearbeitungsteil (18; 31) und einem zweiten Bearbeitungsteil (21; 33) zum Presseingriff der Hauptflächen (4, 5) des Werkstücks (1) auf einander gegenüberliegenden Seiten davon, **dadurch gekennzeichnet, dass** das Werkzeug mit einem dritten Bearbeitungsteil (17; 32) versehen ist, das am Umfang des ersten oder zweiten Bearbeitungsteils (18, 21; 31, 33) zum Presseingriff eines Umfangsrandteils einer Hauptfläche (4, 5) des Werkstücks (1) liegt.

15. Bearbeitungswerkzeug nach Anspruch 14, **dadurch gekennzeichnet, dass** es mit einem vierten Bearbeitungsteil (20) versehen ist, das bezüglich des jeweils anderen, des zweiten oder ersten, Bearbeitungsteils (18, 21; 31, 33) am Umfang liegt, um die Bewegung des dritten Bearbeitungsteils (17; 32) zu begrenzen.

16. Bearbeitungswerkzeug nach Anspruch 14 oder. 15, **dadurch gekennzeichnet, dass** das erste und zweite Bearbeitungsteil (18, 21; 31, 33) zur Ineingriffnahme einer Hauptfläche (4, 5) des Werkstücks (1) jeweils mit einer Eingriffsfläche versehen ist, die an mindestens einem relevanten Teil einer der Hauptflächen (4, 5) des zu bearbeitenden Werkstücks (1) im wesentlichen angepasst ist.

17. Bearbeitungswerkzeug nach Anspruch 16, **dadurch gekennzeichnet, dass** die Eingriffsfläche des ersten und/oder zweiten Bearbeitungsteils (18, 21; 31, 33) in erster Linie, aber nicht genau parallel zu einer allgemeinen Eingriffsrichtung der Eingriffsbearbeitungsteile (17, 18, 21; 31, 32, 33) ausgerichtet ist.

18. Bearbeitungswerkzeug nach einem der Ansprüche 14 - 17, **dadurch gekennzeichnet, dass** zwischen dem dritten Bearbeitungsteil (17; 32) und dem ersten und/oder zweiten Bearbeitungsteil (18, 21; 31, 33) ein deutlicher Spalt, das heißt ein Ausmaß lateralen Spiels, vorhanden ist.

19. Bearbeitungswerkzeug nach einem der Ansprüche 14 bis 18, **dadurch gekennzeichnet, dass** das dritte Bearbeitungsteil (17; 32) eine Ausnehmung (19) umfasst, die mindestens einen gekrümmten Wandteil (23) und einen zur Seite weisenden Wandteil (24) aufweist.

20. Bearbeitungswerkzeug nach Anspruch 19, **dadurch gekennzeichnet, dass** die Ausnehmung weiterhin einen dritten Wandteil (26) aufweist, der an dem bogenförmigen Wandteil (23) angrenzt und sich in lateraler Richtung davon erstreckt, um eine Hauptfläche (5) des Werkstücks (1) mit einer abgestuften Ausnehmung (28; 46) bereitzustellen.

21. Bearbeitungswerkzeug nach Anspruch 19 oder 20, **dadurch gekennzeichnet, dass** der zur Seite weisende Wandteil (24) konisch geformt ist.

22. Bearbeitungswerkzeug nach einem der Ansprüche 14 - 18, **dadurch gekennzeichnet, dass** das dritte Bearbeitungsteil (17; 32) mit einem zur Seite weisenden Flächenteil versehen ist, das ein Muster von Stegen und Nuten definiert.

23. Bearbeitungswerkzeug nach Anspruch 22, **dadurch gekennzeichnet, dass** das dritte Bearbeitungsteil (17; 32) mit Anlagerändern (42 - 45) zum Versehen einer Hauptfläche (5) des Werkstücks (1) mit einer abgestuften Ausnehmung (28; 46) versehen ist.

24. Bearbeitungswerkzeug nach Anspruch 22 oder 23, **dadurch gekennzeichnet, dass** das dritte Bearbeitungsteil (17; 32) mit einem Sattelformteil (34) versehen ist, das konkav geformt ist, so dass es in Aufnahmerichtung des Werkstücks (1) in dem Bearbeitungswerkzeug kontinuierlich konvergiert.

25. Pressensystem, das das Formwerkzeug, wie zum Beispiel eine Stanzpresse, zum Formen eines Werkstücks (1) mit einer definierten Form aus plattenförmigem oder bandförmigem Ausgangsmaterial, sowie das Bearbeitungswerkzeug (15, 16; 31, 32, 33) nach einem der Ansprüche 14 bis 24 enthält.

26. Pressensystem nach Anspruch 25, **dadurch gekennzeichnet, dass** das Werkstück (1) von dem Formwerkzeug zum Bearbeitungswerkzeug (15, 16; 31, 32, 33) unter Abstützung durch das Ausgangsmaterial, aus dem es geformt worden ist, übertragen wird.

27. Werkstück (1), das gemäß dem Herstellungsverfahren nach einem der Ansprüche 1 bis 13 hergestellt ist, insbesondere ein Quermetallelement (1) zur Verwendung in einem Schubriemen zur Verwendung in einem stufenlosen Getriebe für Kraftfahrzeuge, wobei der Schubriemen weiterhin ein Endloszugmittel (6) umfasst, das gegebenenfalls aus mehreren ineinander geschachtelten Metallreifen besteht, und wobei die Quermetallelemente (1) frei beweglich entlang der Kontur des Endloszugmittels (6) angeordnet sind, wobei das Werkstück (1) Hauptflächen (4, 5) und eine Berührungsfläche (12), insbesondere eine Sattelfläche (12) zur Berührung des Endloszugmittels (6), aufweist, wobei die Berührungsfläche (12) bezüglich der Hauptflächen (4, 5) in erster Linie orthogonal ausgerichtet ist und relativ glatt und etwas abgerundet geformt werden muss, um das Vorhandensein von scharfen Kanten in einem möglichen Kontakt mit einem anderen Teil bei der Montage von Teilen, einschließlich des Werkstücks (1), zu verhindern, **dadurch gekennzeichnet; dass** eine Hauptfläche (4; 5) des Werkstücks (1) entlang mindestens eines Teils seines Umfangsrandteils mit einer abgestuften Ausnehmung (28; 46) versehen ist.

28. Werkstück (1) nach Anspruch 27, **dadurch gekennzeichnet, dass** die Tiefe der abgestuften Ausnehmung (28; 46), das heißt ihre Abmessung in einer senkrecht zur Hauptfläche (4, 5) des Werkstücks (1) verlaufenden Richtung, ca. 5 bis 50 µm beträgt.

29. Werkstück (1) nach Anspruch 27 oder 28, **dadurch gekennzeichnet, dass** die Breite der abgestuften Ausnehmung (28; 46), das heißt die kleinste Abmessung in einer parallel zu einer Hauptfläche (4, 5) des Werkstücks (1) verlaufenden Ebene, ca. 0,1 bis 0,5 mm beträgt.

30. Werkstück (1) nach Anspruch 27, 28 oder 29, **dadurch gekennzeichnet, dass** die Berührungsfläche (12) in zwei senkrecht zueinander verlaufenden Richtungen gekrümmt ist, wobei der Krümmungsradius in mindestens einer der Richtungen ca. 5 bis 25 mm beträgt.

31. Werkstück (1) nach einem der Ansprüche 27 bis 30, **dadurch gekennzeichnet, dass** eine Hauptfläche (4; 5) des Werkstücks (1) entlang mindestens eines Teils ihres Umfangsrandteils mit einem erhabenen Rand versehen ist.

32. Werkstück (1) nach einem der Ansprüche 27 bis 31, **dadurch gekennzeichnet, dass** das Werkstück (1) weiterhin mit einer in erster Linie, aber nicht genau, orthogonal zu mindestens einer Hauptfläche (5) des Elements (1) ausgerichteten Außenfläche versehen ist.

33. Metallschubriemen für ein stufenloses Getriebe mit einem Querelement (1), das als das Werkstück nach einem der Ansprüche 27 bis 32 definiert ist.

## Revendications

1. Procédé de fabrication pour une pièce à usiner (1), de préférence de nature substantiellement plate, comme les éléments transversaux d'une courroie de poussée, procédé dans lequel la pièce à usiner (1), dans une première étape de fabrication, est formée en un état intermédiaire, **caractérisé en ce que** la pièce à usiner, dans une deuxième étape de fabrication, est introduite dans un outil de transformation (15, 16 ; 31, 32, 33) dans lequel elle est mise en prise sur deux côtés opposés par des pièces d'usinage (18, 21 ; 31, 33), qui maintiennent au moins la pièce à usiner (1) dans une position fixe, de préférence en exerçant une pression prédéfinie, et dans lequel, dans une troisième étape de fabrication, une partie de bord périphérique de la pièce à usiner (1) est mise en prise par une troisième pièce d'usinage (17 ; 32) périphérique à l'une desdites pièces d'usinage en prise opposée (18, 21 ; 31 ; 33), troisième étape de fabrication dans laquelle au moins l'une desdites pièces d'usinage (17, 18, 21 ; 31, 32, 33) est poussée vers la pièce à usiner (1) le long d'une direction de formage à la presse, de manière à ce que le matériau de la pièce à usiner (1) sous l'influence de la pression exercée par la mise en prise de ladite au moins une pièce d'usinage (17, 18, 21 ; 31, 32, 33) se déforme de façon plastique et s'écoule au moins en partie dans une direction substantiellement transversale à la direction de formage à la presse.

2. Procédé de fabrication selon la revendication 1, dans lequel une quatrième pièce d'usinage (20) limite la mise en prise de la pièce à usiner (1) par la troisième pièce d'usinage (17 ; 32) dans la direction de formage à la presse par rapport aux autres pièces d'usinage (18, 21 ; 31 ; 33).

3. Procédé de fabrication selon la revendication 1 ou 2, dans lequel la troisième pièce d'usinage (17 ; 32) comprend une partie de paroi ou bord (23, 26 ; 42, 43, 44, 45) s'étendant au moins en partie de façon substantiellement parallèle à une face principale (4, 5) de la pièce à usiner (1) lorsqu'elle est mise en prise par les autres pièces d'usinage (18, 21 ; 31, 33).

4. Procédé de fabrication selon la revendication 1, 2 ou 3, dans lequel la troisième pièce d'usinage (17 ; 32) met en prise la pièce à usiner (1) dans une mesure telle qu'un enfoncement étagé (28 ; 46) est prévu à la partie de bord périphérique de la pièce à usiner (2).

5. Procédé de fabrication selon l'une quelconque des revendications précédentes, dans lequel la pièce à usiner (1) est ébavurée au cours de ladite troisième étape de fabrication.

6. Procédé de fabrication selon l'une quelconque des revendications précédentes, par lequel la pièce à usiner (1) est dotée de deux faces principales (4, 5) orientées mutuellement de façon principalement parallèle et d'au moins une surface de contact (3 ; 12) s'étendant entre lesdites faces principales (4, 5) de façon principalement transversale à celles-ci, dans lequel la surface de contact (3 ; 12) est dotée d'un arrondi ou d'un autre profil au cours de ladite troisième étape de fabrication.

7. Procédé de fabrication d'une pièce à usiner (1) dotée de deux faces principales (4, 5) mutuellement orientées de façon principalement parallèle et d'au moins une surface de contact (3; 12) s'étendant entre lesdites faces principales (4, 5) de façon principalement transversale à celles-ci, selon l'une quelconque des revendications précédentes, procédé dans lequel la pièce à usiner (1), dans une première étape de transformation, est formée selon un processus de découpage fin en un état intermédiaire, au moins une face principale (5) de la pièce à usiner (1) présentant par la suite une partie de bord périphérique à bavure, dans lequel, dans une deuxième étape de transformation, la pièce à usiner (1) est reçue et saisie dans un outil de transformation (15, 16), appelé en variante presse à estamper (15, 16), avec une partie de presse centrale supérieure (18) et une partie de presse centrale inférieure (21), chaque partie de presse centrale (18 ; 21) mettant en prise une face principale (4 ; 5) de la pièce à usiner (1), et dans lequel la face principale (5) de la pièce à usiner (1) présentant la partie de bord périphérique à bavure, dans une troisième étape de fabrication, est mise en prise à sa partie de bord périphérique à bavure par une partie de presse périphérique supérieure (17), périphérique à la partie de presse supérieure (18), de manière à ce que les bavures de ladite partie de bord périphérique à bavure soient repliées par rapport à la surface de contact (3, 12), guidées par une partie de paroi concave (23) de la partie de presse périphérique supérieure (17), et par la suite, avec une mise en prise supplémentaire de la partie de presse périphérique supérieure (17), elles soient pressées dans le matériau de la pièce à usiner (1).

8. Procédé de fabrication d'une pièce à usiner (1) selon la revendication 7, dans lequel, dans la troisième étape de fabrication, la surface de contact (3 ; 12) est dotée d'un arrondi ou d'un autre profil, profil qui est formé par le matériau de la pièce à usiner (1) sous l'influence d'une pression exercée par la mise en prise de ladite troisième pièce d'usinage (17 ; 32) qui se déforme de façon plastique et s'écoule au moins en partie dans une direction substantiellement transversale à une direction de mise en prise de la partie de presse périphérique supérieure (17).

9. Procédé de fabrication d'une pièce à usiner (1) selon la revendication 7 ou 8, dans lequel, dans la troisième étape de fabrication, la partie de presse périphérique supérieure (17) met en prise la pièce à usiner (1) dans une mesure telle qu'un enfoncement étagé (28 ; 46) est formé sur la partie de bord périphérique de la pièce à usiner (1).

10. Procédé de fabrication d'une pièce à usiner (1) dotée de deux faces principales (4, 5) mutuellement orientées de façon principalement parallèle et d'au moins une surface de contact (3 ; 12) s'étendant entre lesdites faces principales (4, 5) de façon principalement transversale à celles-ci, selon l'une quelconque des revendications 1 à 6, procédé dans lequel la pièce à usiner (1), dans une première étape de transformation, est formée selon un processus de découpage ordinaire en un état intermédiaire, dans lequel, dans une deuxième étape de fabrication, la pièce à usiner (1) est reçue et saisie et introduite dans un outil de transformation (31, 32, 33), appelé en variante outil de frappe (31, 32, 33) avec une partie de formage à la presse centrale (33), une partie de contre-formage à la presse centrale (31), chaque parties de formage à la presse (31, 33) mettant en prise une face principale (4 ; 5) de la pièce à usiner (1), et une partie de façonnage (32) périphérique à ladite partie de contre-formage à la presse centrale (31), et dans lequel, dans une troisième étape de fabrication, l'une desdites faces principales (4, 5) de la pièce à usiner (1) est mise en prise à une partie de bord périphérique par la partie de façonnage (32) dans une mesure telle que le matériau de la pièce à usiner (1), sous l'influence de la pression exercée par la mise en prise au moins de la partie de formage à la presse centrale (33), se déforme de façon plastique et s'écoule au moins en partie dans une direction substantiellement transversale à une direction de mise en prise de la partie de formage à la presse centrale (33) vers la partie de façonnage (32), définissant ainsi la forme de la surface de contact (3 ; 12).

11. Procédé de fabrication d'une pièce à usiner (1) selon la revendication 10, dans lequel, dans la troisième étape de fabrication, la partie de formage à la presse centrale (33) met en prise la pièce à usiner (1) dans une mesure telle qu'un enfoncement étagé (28 ; 46) est formé sur la partie de bord périphérique de la face principale (4) de la pièce à usiner (1) reçue par la partie de contre-formage à la presse centrale (31).

12. Procédé de fabrication d'une pièce à usiner (1) selon la revendication 10 ou 11, dans lequel, dans la troisième étape de fabrication, le matériau de la pièce à usiner (1) peut s'écouler entre la partie de formage à la presse centrale (33) et la partie de façonnage (32), dotant la pièce à usiner (1) d'un bord relevé sur sa partie de bord périphérique.

13. Procédé de fabrication d'une pièce à usiner (1) selon la revendication 10, 11 ou 12, dans lequel la direction de mise en prise de la partie de formage à la presse centrale (33) est orientée de façon principalement, mais pas exactement, perpendiculaire à au moins l'une desdites faces principales (5) de la pièce à usiner (1).

14. Outil de transformation permettant de transformer une pièce à usiner (1) dotée de deux faces principales (4, 5) mutuellement orientées de façon principalement parallèle et d'au moins une surface de contact (3 ; 12) s'étendant entre lesdites faces principales (4, 5) de façon principalement transversale à celles-ci pour réaliser le procédé selon l'une quelconque des revendications 1 à 13, comprenant une première pièce d'usinage (18 ; 31) et une deuxième pièce d'usinage (21 ; 33) pour mettre en prise par pressage les faces principales (4, 5) de la pièce à usiner (1) sur des côtés mutuellement opposés de celle-ci, **caractérisé en ce que** l'outil est doté d'une troisième pièce d'usinage (17 ; 32), périphérique à l'une ou l'autre des première et deuxième pièces d'usinage (18, 21 ; 31, 33) pour mettre en prise par pressage une partie de bord périphérique d'une face principale (4, 5) de la pièce à usiner (1).

15. Outil de transformation selon la revendication 14, **caractérisé en ce que** l'outil est doté d'une quatrième pièce d'usinage (20) périphérique à l'autre partie respective des première et deuxième pièces d'usinage (18, 21 ; 31, 33) pour limiter le mouvement de la troisième pièce d'usinage (17 ; 32).

16. Outil de transformation selon la revendication 14 ou 15, **caractérisé en ce que** les première et deuxième pièces d'usinage (18, 21 ; 31, 33) permettant de mettre en prise une face principale (4, 5) de la pièce à usiner (1) sont dotées chacune d'une surface de mise en prise correspondant substantiellement à au moins une partie pertinente de l'une des faces principales (4, 5) de la pièce à usiner (1) à transformer.

17. Outil de transformation selon la revendication 16, **caractérisé en ce que** la surface de mise en prise d'au moins l'une desdites première et deuxième pièces d'usinage (18, 21 ; 31, 33) fait face de façon principalement, mais pas exactement, parallèle à une direction générale de mise en prise des pièces d'usinage de mise en prise (17, 18, 21 ; 31, 32, 33).

18. Outil de transformation selon l'une quelconque des revendications 14 à 17, **caractérisé en ce qu'**un intervalle notable, c'est-à-dire une quantité de jeu latéral, existe entre la troisième pièce d'usinage (17 ; 32) et au moins l'une des première ou deuxième pièces d'usinage (18, 21 ; 31, 33).

19. Outil de transformation selon l'une quelconque des revendications 14 à 18, **caractérisé en ce que** la troisième pièce d'usinage (17 ; 32) comprend un enfoncement (19) présentant au moins une partie de paroi incurvée (23) et une partie de paroi faisant face latéralement (24).

20. Outil de transformation selon la revendication 19, **caractérisé en ce que** l'enfoncement (19) présente en outre une troisième partie de paroi (26) contiguë à ladite partie de paroi en forme d'arc (23) et s'étendant dans une direction latérale à partir de celle-ci pour doter une face principale (5) de la pièce à usiner (1) d'un enfoncement étagé (28 ; 46).

21. Outil de transformation selon la revendication 19 ou 20, **caractérisé en ce que** la partie de paroi faisant face latéralement (24) est de forme conique.

22. Outil de transformation selon l'une quelconque des revendications 14 à 18, **caractérisé en ce que** la troisième pièce d'usinage (17 ; 32) est dotée d'une partie de surface faisant face latéralement, définissant un motif de nervures et de rainures.

23. Outil de transformation selon la revendication 22, **caractérisé en ce que** la troisième pièce d'usinage (17 ; 32) est dotée de bords d'appui (42 à 45) afin de doter une face principale (5) de la pièce à usiner (1) d'un enfoncement étagé (28 ; 46).

24. Outil de transformation selon la revendication 22 ou 23, **caractérisé en ce que** la troisième pièce d'usinage (17 ; 32) est dotée d'une partie en forme de selle (34), partie (34) qui est façonnée de façon concave de telle sorte qu'elle converge en continu dans une direction par laquelle la pièce à usiner (1) est reçue dans l'outil de transformation.

25. Système de formage à la presse intégrant à la fois un outil de formage, comme une presse à découper, pour former une pièce à usiner (1) avec une forme définie à partir d'un matériau de base de type plaque ou de type bande, et l'outil de transformation (15, 16 ; 31, 32, 33) selon l'une quelconque des revendications 14 à 24.

26. Système de formage à la presse selon la revendication 25, **caractérisé en ce que** la pièce à usiner (1) est transférée dudit outil de formage à l'outil de transformation (15, 16 ; 31, 32, 33), supportée par ledit matériau de base à partir duquel elle a été formée.

27. Pièce à usiner (1) réalisée conformément au procédé de fabrication selon l'une quelconque des revendications 1 à 13, plus particulièrement un élément métallique transversal (1) pour une utilisation dans une courroie de poussée destinée à une utilisation dans une transmission à variation continue pour véhicules motorisés, cette courroie de poussée comprenant en outre un moyen de traction sans fin (6), composé éventuellement d'une pluralité de crochets métalliques imbriqués, et par lequel lesdits éléments métalliques transversaux (1) sont agencés de façon à être librement mobiles le long du contour dudit moyen de traction sans fin (6), pièce à usiner (1) qui présente des faces principales (4, 5) et une surface de contact (12), en particulier une surface en forme de selle (12) pour mettre en contact ledit moyen de traction sans fin (6), surface de contact (12) qui est orientée de façon principalement orthogonale par rapport auxdites faces principales (4, 5) et doit être façonnée de façon relativement lisse et légèrement arrondie de façon à empêcher la présence de bords tranchants en contact possible avec une autre partie dans un ensemble de parties comprenant la pièce à usiner (1), **caractérisée en ce qu'**une face principale (4 ; 5) de la pièce à usiner (1) est dotée d'un enfoncement étagé (28 ; 46) le long d'au moins une partie de sa partie de bord périphérique.

28. Pièce à usiner (1) selon la revendication 27, **caractérisée en ce que** la profondeur de l'enfoncement étagé (28 ; 46), c'est-à-dire sa dimension dans une direction perpendiculaire à une face principale (4, 5) de la pièce à usiner (1), est d'environ 5 à 50 µm.

29. Pièce à usiner (1) selon la revendication 27 ou 28, **caractérisée en ce que** la largeur de l'enfoncement étagé (28 ; 46), c'est-à-dire la plus petite dimension dans un plan parallèle à une face principale (4, 5) de la pièce à usiner (1), est d'environ 0,1 à 0,5 mm.

30. Pièce à usiner (1) selon la revendication 27, 28 ou 29, **caractérisée en ce que** la surface de contact (12) est incurvée dans deux directions mutuellement perpendiculaires, de manière à ce que le rayon de courbure dans au moins l'une desdites directions mesure environ 5 à 25 mm.

31. Pièce à usiner (1) selon l'une quelconque des revendications 27 à 30, **caractérisée en ce qu'**une face principale (4; 5) de la pièce à usiner (1) est dotée d'un bord relevé le long d'au moins une partie de sa partie de bord périphérique.

32. Pièce à usiner (1) selon l'une quelconque des revendications 27 à 31, **caractérisée en ce que** la pièce à usiner (1) est en outre dotée d'une surface extérieure (50, 51) orientée de façon principalement, mais pas exactement, orthogonale à au moins une face principale (5) de l'élément (1).

33. Courroie de poussée métallique pour une transmission à variation continue, comprenant un élément transversal (1) défini comme la pièce à usiner selon l'une quelconque des revendications 27 à 32.
